# EUROPEAN PATENT APPLICATION

(11) **EP 1 512 717 A1**
(43) Date of publication of application: **09.03.2005**
(21) Application number: 03730784.0
(22) Date of filing: 02.06.2003
(51) Int. Cl.: C08L 21/00, C08K 3/00, C08K 7/06, B60C 1/00

(54) **RUBBER COMPOSITION AND TIRE OBTAINED FROM THE SAME**

(30) Priority: 03.06.2002 JP 2002161178; 03.10.2002 JP 2002291715
(71) Applicant: Bridgestone Corporation, Tokyo 104-8340 (JP); GSI Creos Corporation, Tokyo 102-0074 (JP)
(72) Inventor: AOKI, Sei, Bridgestone Corporation, Tech. Cntr., Kodaira-shi, Tokyo 187-8531 (JP); TAKEICHI, Hideo, Bridgestone Corp., Tech. Cntr., Kodaira-shi, Tokyo 187-8531 (JP); YANAGISAWA, Takashi, c/o GSI Creos Corporation, Tokyo 100-0000 (JP); HIGAKI, Shunji, GSI Creos Corporation, Tokyo 100-0000 (JP)
(74) Representative: Whalley, Kevin
(86) International application number: PCT/JP2003/006948
(87) International publication number: WO 2003/102073

(57) **Abstract**

The present invention provides a rubber composition comprising 100 parts by mass of a rubber and 0.1 to 100 parts by mass of carbon fibers as a filler which are produced by a vapor phase epitaxial growth method and respectively include one or more bottomless cup-shaped carbon network layers, wherein the respective carbon network layer in the form of stacked cups have a large diameter portion whose end face is exposed to a periphery of the carbon fiber. The rubber composition and tire of the present invention have a high thermal conductivity and are excellent in other properties such as mechanical properties.

## Description

### TECHNICAL FIELD

The present invention relates to a rubber composition and a tire using the rubber composition, and more particularly to a rubber composition having an excellent thermal conductivity and a tire using the rubber composition.

### BACKGROUND ARTS

Various products such as electric and electronic parts, tires and belts have been produced from a rubber composition containing various natural rubbers or various synthetic rubbers as a base material thereof according to aimed properties thereof. The properties and functions of such products are largely influenced by not only a rubber material as the base material but also secondary materials such as various fillers blended therein or vulcanization conditions.

For example, as fillers for reinforcing the natural rubbers, there are extensively known carbon black and silica. Further, for the purpose of enhancing a thermal conductivity of the rubber products, there is known the method of blending alumina, boron nitride, etc., therein. In addition, for the purpose of imparting good electric properties to the rubber products, there is known the method of blending metal powder such as alumina powder and nickel powder, or electrically conductive carbon therein.

However, in order to obtain high effects by the conventionally known fillers, it has been inevitably required to increase the amount of these fillers blended in the rubber products. As a result, the fillers fail to be uniformly dispersed in rubbers, so that there arise various defects such as uneven properties, deteriorated moldability due to increased viscosity and deteriorated physical properties, as well as unpractically low mechanical properties of the resultant rubber products.

Hitherto, there are known rubber compositions containing a rubber and carbon fibers blended therein (for example, refer to Japanese Patent Application Laid-open No. Hei 9-157404). However, these conventional carbon fibers obtained by a vapor phase epitaxial growth method are in the form of short fibers that are produced by growing carbon obtained by heat-decomposing hydrocarbons such as benzene and methane at a temperature of about 700 to 1,000°C over catalyst particles such as ultrafine iron or nickel particles as a nucleus. These carbon fibers are usually composed of concentrically grown ordinary carbon network layers or carbon network layers grown in the direction perpendicular to the fiber axis. However, these conventionally known carbon network layers concentrically grown or grown in the direction perpendicular to the fiber axis tend to be generally deteriorated in adhesion property to rubbers.

An object of the present invention is to find out a filler for a rubber composition which is capable of imparting a high thermal conductivity to rubbers even when used in a relatively small amount, and has no adverse influences on other properties such as mechanical properties of rubbers; provide a rubber composition containing such a filler; and provide a tire using the rubber composition.

### DISCLOSURE OF THE INVENTION

As a result of extensive researches in view of the above object, the present inventors have found that the above object can be achieved by:
(1) A rubber composition comprising 100 parts by mass of a rubber and 0.1 to 100 parts by mass of carbon fibers as a filler which are produced by a vapor phase epitaxial growth method and respectively include one or more bottomless cup-shaped carbon network layers, wherein the respective carbon network layers in the form of stacked cups have a large diameter portion whose end face is exposed onto a periphery of the carbon fibers.
(2) The rubber composition according to the above aspect (1), wherein said filler includes the carbon fibers produced by a vapor phase epitaxial growth method which respectively include a plurality of the bottomless cup-shaped carbon network layers stacked on each other.
(3) The rubber composition according to the above aspect (2), wherein said carbon fibers have a knotless (bridge-free) hollow shape.
(4) The rubber composition according to the above aspect (3), wherein the hollow carbon fibers include a hollow portion having outside and inside surfaces onto which end faces of the carbon network layer are exposed.
(5) The rubber composition according to the above aspect (4), wherein 2% or more of the end face of the carbon network layer which is located on the outside surface of the hollow portion of the carbon fiber, is exposed thereto.
(6) The rubber composition according to the above aspect (4) or (5), wherein the exposed end face of the carbon network layer has irregularities on a scale of atomic level.
(7) The rubber composition according to any of the above aspects (1) to (6), wherein the carbon network layer remains ungraphitized even when it is heat-treated at a high temperature of 2,500°C or higher.
(8) The rubber composition according to any of the above aspects (1) to (7), wherein the carbon fibers have diameters of 1 to 1,000 nm and lengths of 0.1 to 1,000 µm.
(9) The rubber composition according to any of the above aspects (1) to (7), wherein the carbon fibers have diameters of 5 to 500 nm and lengths of 0.5 to 750 µm.
(10) The rubber composition according to any of the above aspects (1) to (7), wherein the carbon fibers have diameters of 10 to 250 nm and lengths of 1 to 500 µm.
(11) The rubber composition according to any of the above aspects (1) to (10), further comprising a filler other than the carbon fibers in an amount of 1 to 60 parts by mass.
(12) The rubber composition according to the above aspect (11), wherein the filler other than the carbon fibers is carbon black and/or an inorganic filler.
(13) A tire using the rubber composition as claimed in any of the above aspects (1) to (12).

The present invention has been accomplished on the basis of the findings.

### BRIEF DESCRIPTION OF THE DRAWINGS

Fig. 1 is a schematic view showing a carbon fiber according to the present invention obtained by a vapor-phase epitaxial growth method which includes a plurality of bottomless cup-shaped carbon network layers stacked on each other.
Fig. 2 is a transmission electron photomicrograph of a carbon fiber having a herring bone structure which was produced by a vapor-phase epitaxial growth method in Example 1.
Fig. 3 is an enlarged view of the photomicrograph shown in Fig. 2.
Fig. 4 is a schematic view of Fig. 3.
Fig. 5 is a transmission electron photomicrograph of a carbon fiber having a herring bone structure which was obtained by heat-treating the carbon fiber shown in Fig. 2 at a temperature of about 530°C in atmospheric air for one hour.
Fig. 6 is an enlarged view of the photomicrograph shown in Fig. 5.
Fig. 7 is a further enlarged view of Fig. 6.
Fig. 8 is a schematic view of Fig. 7.
Fig. 9 is a view showing Raman spectra of carbon fibers obtained after heat-treating a carbon fiber having a herring bone structure (specimen name: Pristine 24PS) at temperatures of 500°C, 520°C, 530°C and 540°C, respectively, in atmospheric air for one hour.
Fig. 10 is a view showing Raman spectra of carbon fibers having different outer diameters from each other prior to the heat treatment in which Pristine 19PS had an average outer diameter of 150 nm, and Pristine 24PS had an average outer diameter of 100 nm.
Fig. 11 is a view showing Raman spectra of carbon fibers obtained after subjecting Pristine 19PS and Pristine 24PS to ordinary graphitization treatment at 3,000°C.
Fig. 12 is a graph showing a distribution of lengths of the carbon fibers at every elapsed time while they were subjected to grinding by ball milling.
Fig. 13 is electron photomicrographs of the carbon fiber before initiation of the ball milling.
Fig. 14 is electron photomicrographs of the carbon fiber after the elapse of 2 hr from initiation of the ball milling.
Fig. 15 is electron photomicrographs of the carbon fiber after the elapse of 5 hr from initiation of the ball milling.
Fig. 16 is electron photomicrographs of the carbon fiber after the elapse of 10 hr from initiation of the ball milling.
Fig. 17 is electron photomicrographs of the carbon fiber after the elapse of 24 hr from initiation of the ball milling.
Fig. 18 is a transmission electron photomicrograph showing the state in which the cup-shaped carbon network layers began to be liberated from the carbon fiber during the ball milling.
Fig. 19 is an enlarged view of Fig. 18.
Fig. 20 is a further enlarged view of Fig. 19.
Fig. 21 is a transmission electron photomicrograph showing the state in which the carbon fiber was separated and cut into carbon fibers each composed of several tens of stacked bottomless cup-shaped carbon network layers.

### (EXPLANATION OF REFERENCE NUMERALS)

1: Bottom portion; 2: End face of a large diameter portion of respective cup-shaped carbon network layers which are stacked on each other along an outer periphery of the carbon fiber; 3: Outside surface of a hollow portion of the carbon fiber; 4: Inside surface of a hollow portion of the carbon fiber; 10: Carbon network layer; 12: Deposit layer; 14: Central bore; 16: Irregularity on a scale of atomic level.

### PREFERRED EMBODIMENT TO CARRY OUT THE INVENTION

The rubber composition of the present invention comprises a rubber as a base material, and carbon fibers added thereto which are produced by a vapor phase epitaxial growth method and respectively include one or more bottomless cup-shaped carbon network layers. Preferably the carbon fibers have a plurality of the bottomless cup-shaped carbon network layers stacked on each other, wherein the respective carbon network layers in the form of stacked cups have a large diameter portion whose end face is exposed to an outer periphery of the carbon fibers.

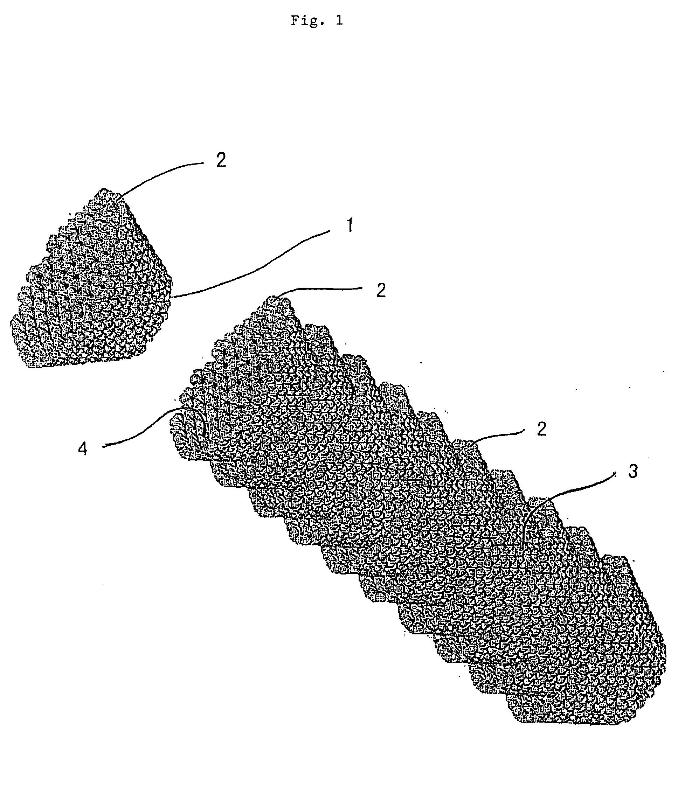

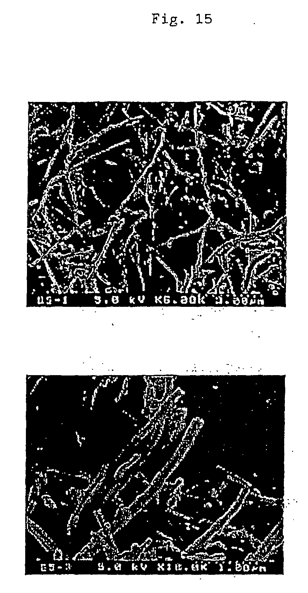

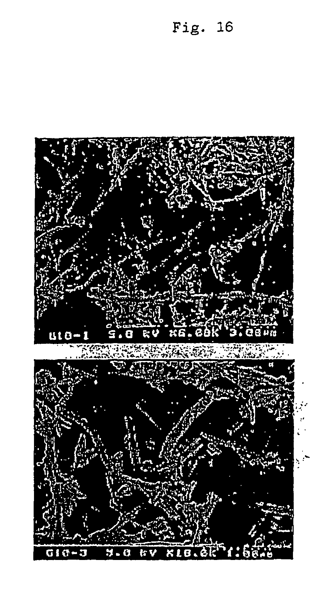

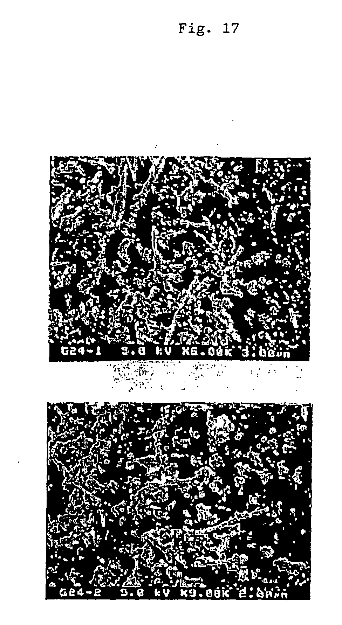

In the followings, the features of the carbon fibers used in the present invention are described in detail by referring to Figs. 1 to 21.

Fig. 1 is a schematic view showing a carbon fiber obtained by a vapor-phase epitaxial growth method which includes a plurality of bottomless cup-shaped carbon network layers stacked on each other according to the present invention. The carbon fiber is composed of stacked carbon network layers in which a bottom portion represented by reference numeral 1 is lacking or opened. Thus, the carbon fiber composed of the stacked bottomless carbon network layers has a knotless (bridge-free) hollow shape. A portion represented by reference numeral 2 is an end face of a large diameter portion of the respective cup-shaped carbon network layers stacked on each other along an outer periphery of the carbon fibers. In the present invention, the end face is in an exposed state as described below. Further, portions represented by reference numerals 3 and 4 are respectively an outside surface and an inside surface of a hollow portion of the carbon fiber onto which the end face of the respective carbon network layers is preferably exposed.

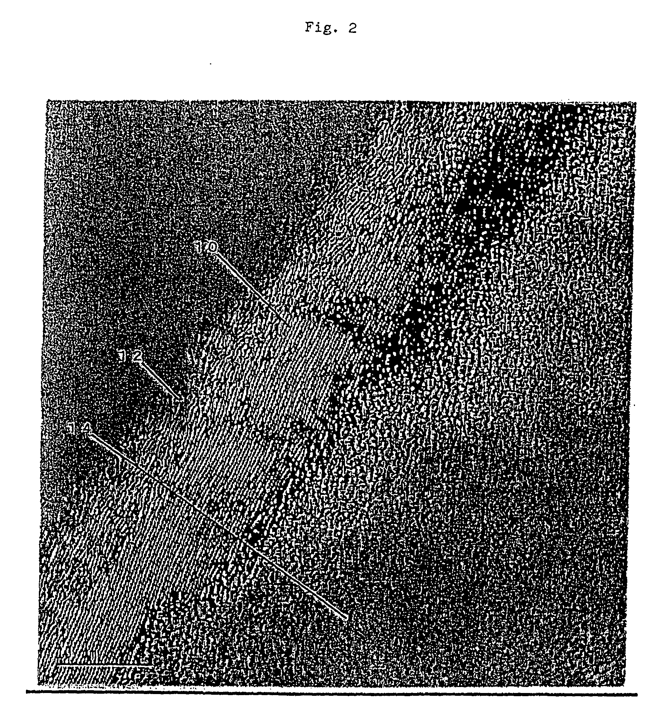

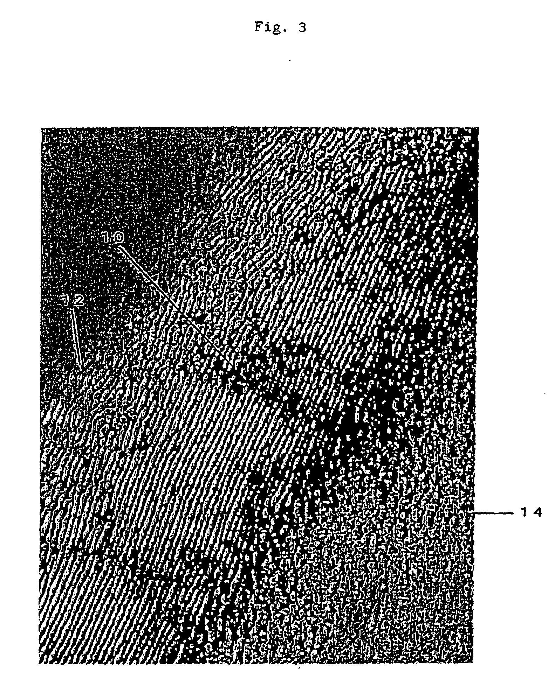

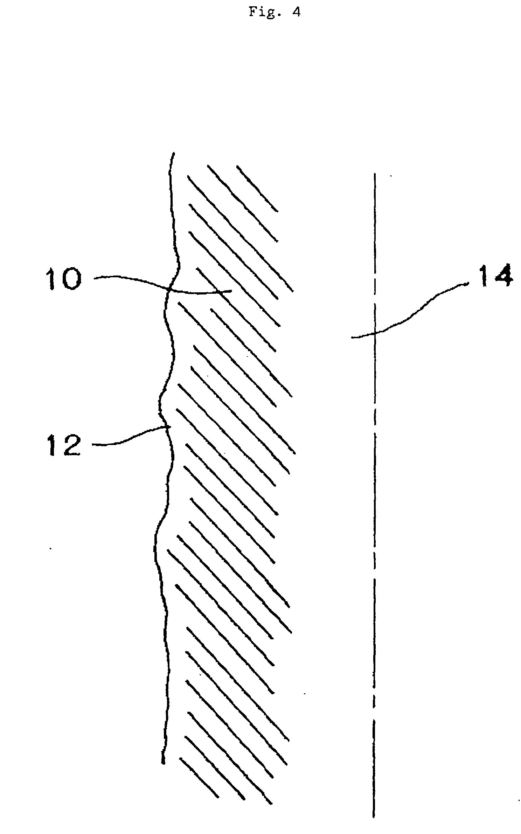

Next, Fig. 2 is a transmission electron photomicrograph of a carbon fiber having a herring bone structure which was produced by a vapor-phase epitaxial growth method; Fig. 3 is an enlarged view of the photomicrograph shown in Fig. 2; and Fig. 4 is a schematic view of the carbon fiber having a herring bone structure. Here, reference numerals 10 and 14 represent the inclined carbon network layers and a central bore of the carbon fiber, respectively. A deposit layer 12 made of excessive amorphous carbon is formed on the carbon fiber so as to cover the carbon network layers 10.

Upon production of carbon fibers by the above vapor-phase epitaxial growth method, by controlling the vapor-phase epitaxial growth conditions such as catalysts, temperature range and flow rate, it is possible to produce carbon fibers having a herring bone structure in which stacked carbon network layers are inclined at a constant angle relative to an axis of the carbon fiber. The carbon fibers of the present invention have such a herring bone structure.

On the surfaces of the carbon fibers produced by the vapor-phase epitaxial growth method, there is usually formed a thin deposit layer made of excessive amorphous carbon which has failed to be sufficiently crystallized. It is considered that the deposit layer has a low activity and, therefore is deteriorated in adhesion to rubbers.

The carbon fibers of the present invention are characterized in that the deposit layer 12 covering the carbon network layers 10 is partially removed so as to expose at least a part of the end face (end of 6-membered ring) of the respective carbon network layers. The thus exposed end face of the carbon network layer 10 tends to be bonded to other atoms and exhibit an extremely high activity. In the carbon fibers of the present invention, at least 2% and preferably 7% or higher of the end face (end of 6-membered ring) of the respective carbon network layers is exposed. As a result, the carbon fibers of the present invention can exhibit an improved adhesion to rubbers, and can provide a rubber composition having an excellent thermal conductivity: Therefore, from the above viewpoints, the degree of exposure of the end face of the respective carbon network layers is preferably as large as possible.

Also, in the carbon fibers of the present invention, when the deposit layer is positively removed therefrom, the exposed portion of the end face of the carbon network layers can be further increased, thereby enabling production of a rubber composition having an extremely excellent thermal conductivity. The reason therefor is considered as follows. That is, the deposit layer 12 is removed by the below-mentioned heat treatment in atmospheric air, etc., and at the same time, the number of oxygen containing functional groups such as phenolic hydroxyl groups, carboxyl groups, quinone-type carbonyl groups and lactone groups which are present on the exposed end face of the carbon network layers is increased, so that the carbon fibers can be enhanced in hydrophilicity and affinity to various substances by the increase in these oxygen-containing functional groups.

Various methods may be used to remove the deposit layer 12 and expose the end face of the carbon network layers 10. One of the methods is such a method in which the carbon fibers are heated at a temperature of 400°C or higher, preferably 500°C or higher and more preferably 520 to 530°C in atmospheric air for one to several hours to oxidize and thermally decompose the deposit layer 12. Alternatively, the deposit layer 12 may be removed to expose the end face of the carbon network layers by the method of washing the carbon fibers with supercritical water, the method of heating the carbon fibers immersed in hydrochloric acid or sulfuric acid to a temperature of about 80°C while stirring with a stirrer.

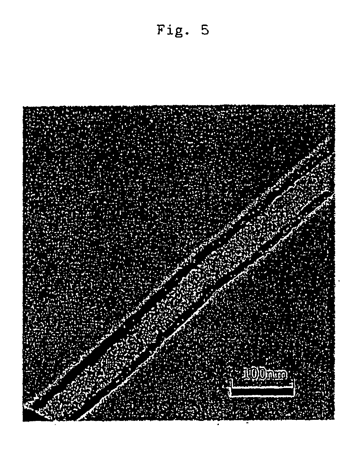

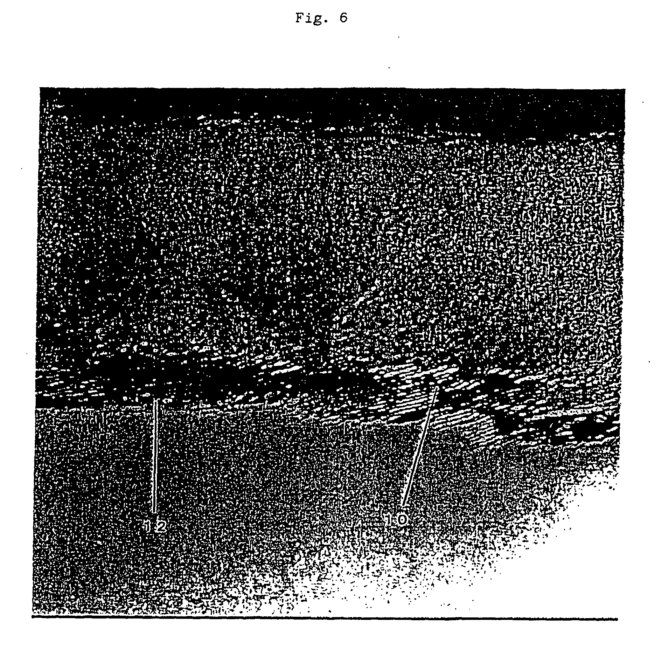

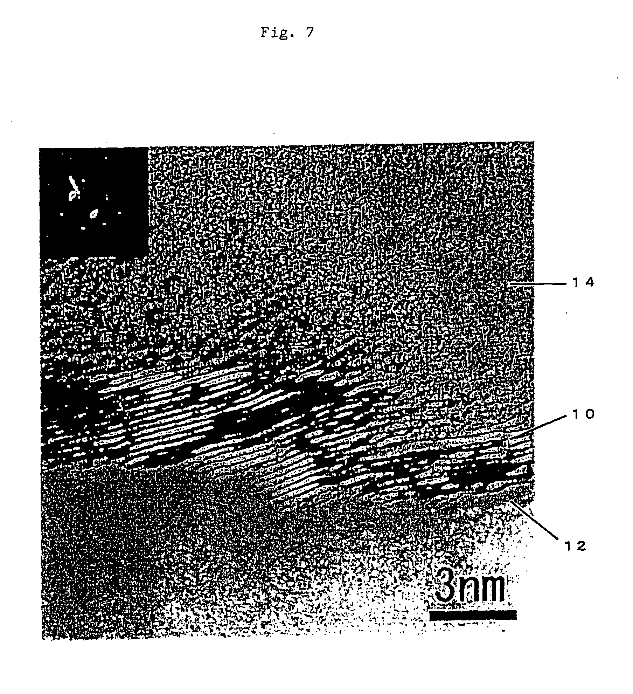

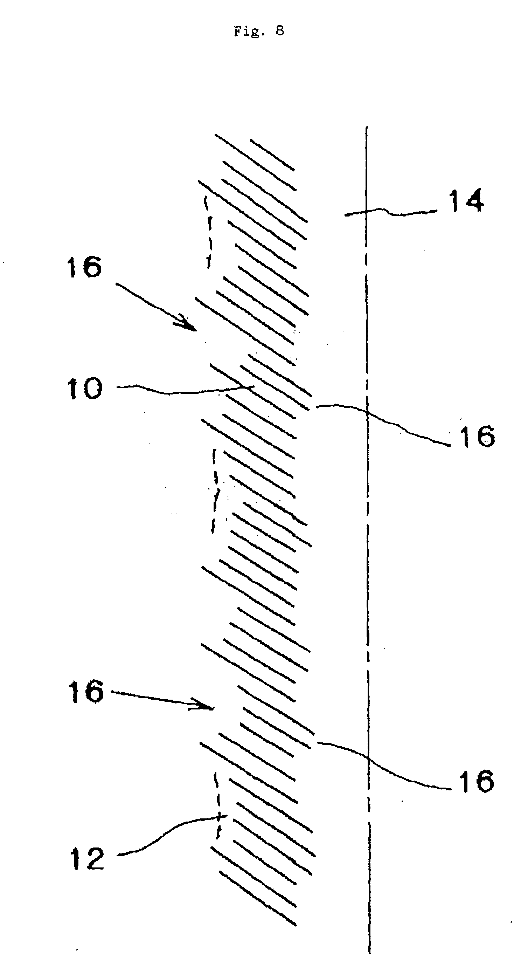

Fig. 5 is a transmission electron photomicrograph of a carbon fiber obtained by heat-treating the carbon fiber having a herring bone structure shown in Fig. 1 at a temperature of about 530°C for one hour in atmospheric air; Fig. 6 is an enlarged view of the photomicrograph shown in Fig. 5; Fig. 7 is a further enlarged view of Fig. 6; and Fig.8 is a schematic view of Fig. 7. It is recognized that when subjecting the carbon fiber to the above heat treatment, a part of the deposit layer 12 is removed, so that the end face (end of carbon 6-membered ring) of the respective carbon network layers 10 is exposed. Meanwhile, it is considered that most of the residual deposit layer 12 is decomposed and simply attached onto the carbon fibers. Therefore, when the carbon fibers are heat-treated for several hours, and further washed with supercritical water, 100% of the deposit layer 12 can be completely removed therefrom.

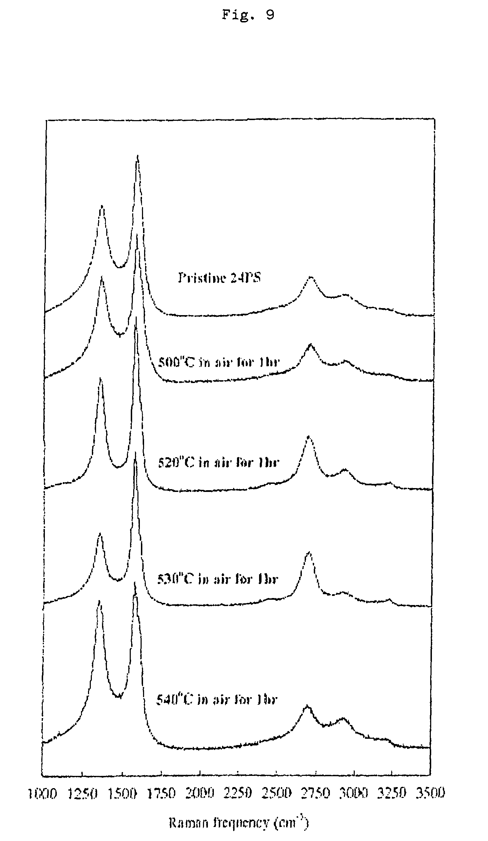

Fig. 9 shows Raman spectrum of the carbon fiber (specimen name: Pristine 24PS; average outer diameter: 100 nm) which was allowed to stand in atmospheric air for one hour, as well as those obtained after heat-treating the carbon fibers at temperatures of 500°C, 520°C, 530°C and 540°C, respectively, in atmospheric air for one hour. As is apparent from Fig. 9, since the peaks of the spectra were observed at 1,360 cm⁻¹ and 1,580 cm⁻¹, it was confirmed that these fibers were carbon fibers having no graphitization structure.

As shown in Figs. 5 to 8, the respective carbon fibers of the present invention are composed of one or more bottomless cup-shaped carbon network layers, and usually several to several hundred thousand carbon network layers are stacked on each other. The individual carbon fibers are in the form of fine particles and, therefore, extremely excellent in dispersibility in rubbers or resins. In particular, when the carbon fibers are used in rubbers to form a composite material therewith, the obtained rubber composition can exhibit not only a good flexibility and a high strength, but also a high adhesion to the rubbers and an excellent thermal conductivity.

In addition, the respective carbon fibers of the present invention are preferably in the form of a knotless (bridge-free) hollow shape, and more preferably have a hollow portion extending at least in the range of from several ten nm to several ten µm as shown in Figs. 5 to 8. Further, in the hollow carbon fibers, the end face of the respective carbon network layers is preferably exposed onto outside and inside surfaces of the hollow portion of the carbon fibers. The degree of exposure of the end face onto the outside and inside surfaces of the hollow portion is more preferably as large as possible. Among them, the percentage of exposure of the end face onto the outside surface of the hollow portion of the carbon fiber is preferably 2% or higher and more preferably 7% or higher.

Meanwhile, the carbon network layers are inclined at an angle of about 20 to 35° relative to the center line of the respective carbon fibers.

Further, in the carbon fibers of the present invention, the exposed end face of the carbon network layers preferably have irregularities on a scale of atomic level. The irregularities formed on the end face have an anchoring effect and allows the carbon fibers to exhibit a more excellent adhesion to the rubbers, so that the resultant rubber composition can show extremely excellent thermal properties.

It is considered that the irregularities on a scale of atomic level as formed on the end face are attributed to a turbostratic structure caused by slippage (grind) of carbon network surfaces. In the carbon fibers having the turbostratic structure, the respective carbon hexagonal network surfaces constitute a parallel stacked structure. In the stacked structure, the respective carbon hexagonal net surfaces are slipped or rotated in a plane direction thereof, so that the structure shows no crystallographic regularity.

In addition, the carbon fibers of the present invention are not graphitized even when being heat-treated at a high temperature of 2,500°C or higher, while ordinary carbon fibers are graphitized when being heat-treated at such a high temperature. The reason why the carbon fibers of the present invention are not graphitized even when being subjected to such a graphitization treatment is considered as follows. That is, the deposit layer 12 which is susceptible to graphitization is removed from the carbon fibers, and the residual portion of the carbon fibers with the herring bone structure which is obtained after removing the deposit layer 12 therefrom is inherently unsusceptible to graphitization. This indicates that the carbon fibers of the present invention is thermally stable.

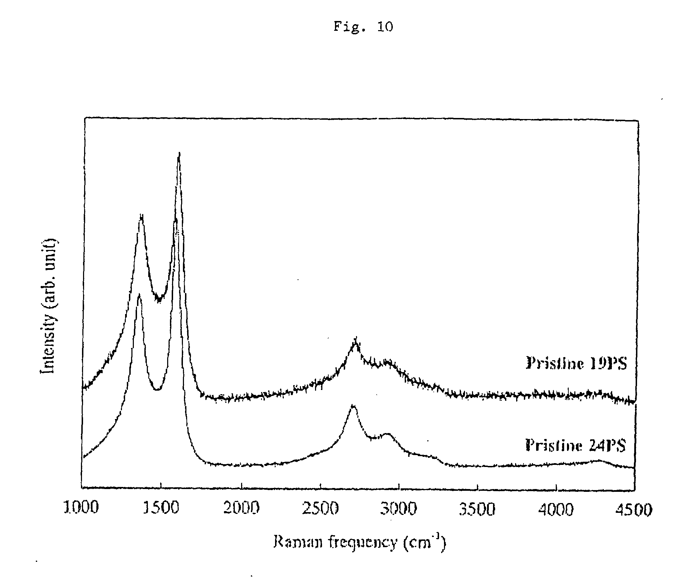

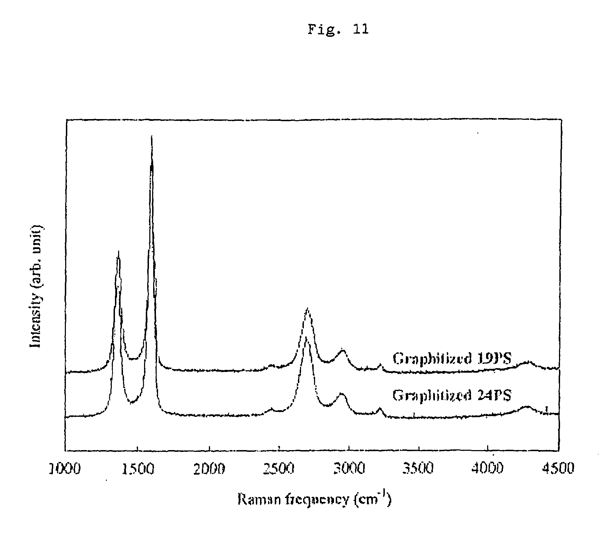

Meanwhile, Fig. 10 shows Raman spectra of carbon fibers with a herring bone structure having different outer diameters from each other prior to the heat treatment in which Pristine 19PS had an average outer diameter of 150 nm, and Pristine 24PS had an average outer diameter of 100 nm. On the other hand, Fig. 11 shows Raman spectra of carbon fibers obtained after subjecting the above specimens to ordinary graphitization treatment at 3,000°C. From the comparison between both the spectra, since no significant difference was observed therebetween and the peaks thereof were present at 1,360 cm⁻¹ and 1,580 cm⁻¹, it is confirmed that the carbon fibers of the present invention are not graphitized even when being subjected to ordinary graphitization treatment.

The carbon fibers of the present invention preferably have diameters of 1 to 1,000 nm, more preferably 5 to 500 nm and most preferably 10 to 250 nm, and further preferably have lengths of 0.1 to 1,000 µm, more preferably 0.5 to 750 µm and most preferably 1 to 500 µm. When the diameters and lengths of the carbon fibers are controlled within the above-specified ranges, the carbon fibers can be enhanced in affinity to rubbers which is useful to obtain a rubber composition having an improved thermal conductivity.

The carbon fibers of the present invention may be produced, for example, by the following method.

Hydrocarbons such as benzene are charged under a predetermined partial pressure into an ordinary reaction vessel, and reacted therein at a temperature of about 1,100°C for about 20 min in the presence of a transition metal complex such as ferrocene as a catalyst to obtain carbon fibers with a herring bone structure which have a diameter of about 100 nm. In this case, when appropriately controlling a flow rate of the raw material and the reaction temperature, it is possible to produce carbon fibers which are respectively composed of bottomless cup-shaped carbon network layers stacked on each other, and have a knotless (bridge-free) hollow structure extending over the range of from several ten nm to several ten µm. As described above, since the thus obtained carbon fibers have a deposit layer thereon, at least a part of the deposit layer is removed by the above method. The thus produced carbon fibers are short fibers (having a length of several ten µm) which are composed of several ten thousand to several hundred thousand unit carbon network layers each having a bottomless cup shape, i.e., a bottom-opened reverse V-shape in cross-section. The short fibers have a large molecular weight (length) and are insoluble in water, organic solvents, etc. The carbon fibers of the present invention are obtained by cutting these short fibers into individual carbon fibers composed of one or more unit carbon network layers and preferably several to several ten thousand unit carbon network layers.

As the method of obtaining the carbon fibers of the present invention by cutting the above short fibers into individual carbon fibers, there may be used various methods, for example, there may be suitably used the method of adding an appropriate amount of water or a solvent to the short fibers and then moderately grinding the short fibers in a mortar with a pestle for an appropriate time.

With the above procedure, since the cyclic carbon network layers have a relatively high strength and are bonded to each other by a weak van der Waals force, the short fibers are cut and separated into individual carbon fibers especially at a weakly bonding portion between the carbon network layers without breakage of the respective unit carbon network layers.

Meanwhile, the short fibers may be effectively cut into individual carbon fibers by grinding the fibers using a mortar in a liquid nitrogen. When the liquid nitrogen is evaporated, water present in ambient air is absorbed therein and formed into ice. Therefore, the short fibers are ground by the pestle together with the ice, so that mechanical stress applied thereto is reduced, resulting in facilitated separation between the unit carbon network layers.

The above cutting step may be performed prior to removal of the deposit layer. In reverse, after completion of the cutting step, the deposit layer may be removed from the obtained carbon fibers.

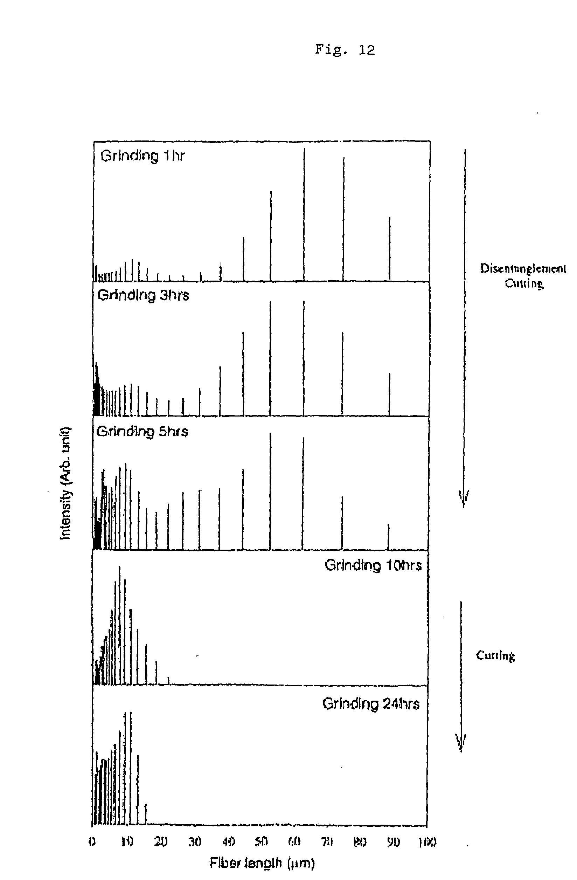

From the industrial viewpoints, the above cutting step may also be suitably performed by subjecting the short fibers to grinding treatment by ball milling. In the followings, the method of controlling a length of the carbon fibers by ball milling is explained in detail. In this method, there may be used a ball mill, for example, available from Asahi Rika Seisakusho Co., Ltd., and alumina balls each having a diameter of 5 mm. More specifically, for example, 1 g of the above carbon fibers, 20 g of alumina balls and 50 cc of distilled water may be charged into a cell, and milled therein at a rotating speed of 350 rpm. The carbon fibers subjected to the cutting treatment by the above method were sampled at every elapsed time of 1, 3, 5, 10 and 24 hr, and analyzed using a laser particle size distribution meter. The results are shown in Fig. 12 as a distribution of lengths of the carbon fibers sampled at every elapsed time. As a result, it is confirmed that as the elapsed milling time was increased, the fiber length was shortened. In particular, after the elapsed time of 10 hr, the fiber length was abruptly reduced to 10 µm or lower. Also, after the elapsed time of 24 hr, another peak was observed at about 1 µm, and the fiber length was still finer. Meanwhile, at the peak observed at about 1 µm, the length and diameter of the carbon fibers are almost identical to each other. Therefore, it is considered that the length and diameter are counted double.

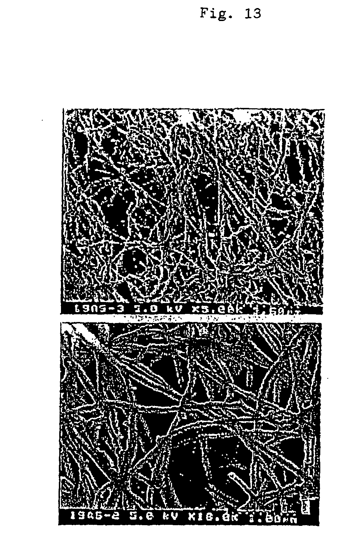

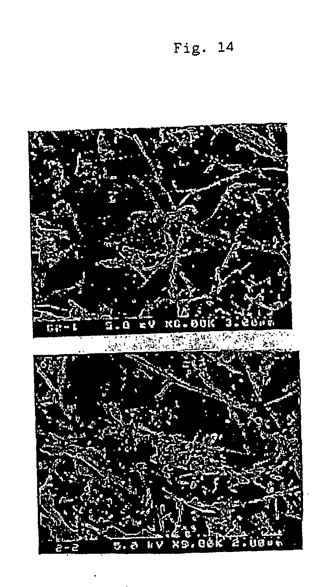

Also, Fig. 13 is a transmission electron photomicrograph of the carbon fiber before initiation of the ball milling, and Figs. 14, 15, 16 and 17 are transmission electron photomicrographs of the carbon fibers after the elapse of 2 hr, 5 hr, 10 hr and 24 hr, respectively, from initiation of the ball milling. The carbon fibers before the ball milling are composed of those fibers having a length of several ten µm which are entangled with each other, and, therefore, have an extremely low bulk density. Whereas, as the elapsed milling time is increased, the fiber length is reduced. As a result, it is recognized that after the elapsed time of 24 hr, the carbon fibers are substantially in the form of particles. Also, after the elapsed time of 24 hr, the carbon fibers are substantially free from entanglement and, therefore, have a high bulk density.

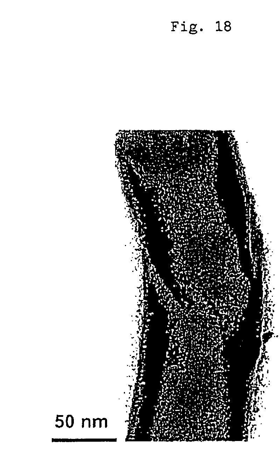

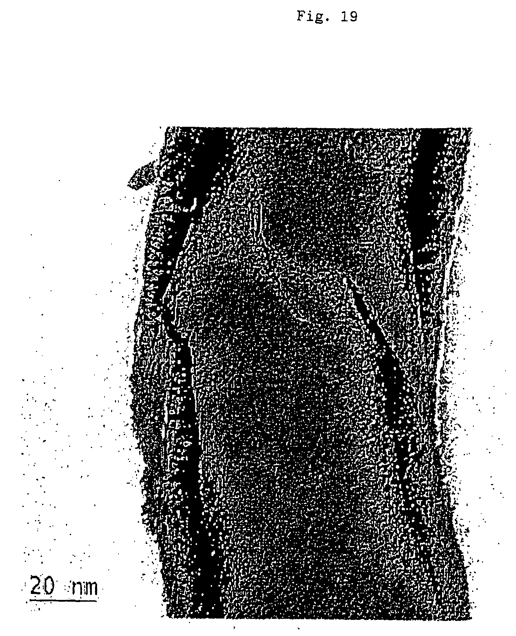

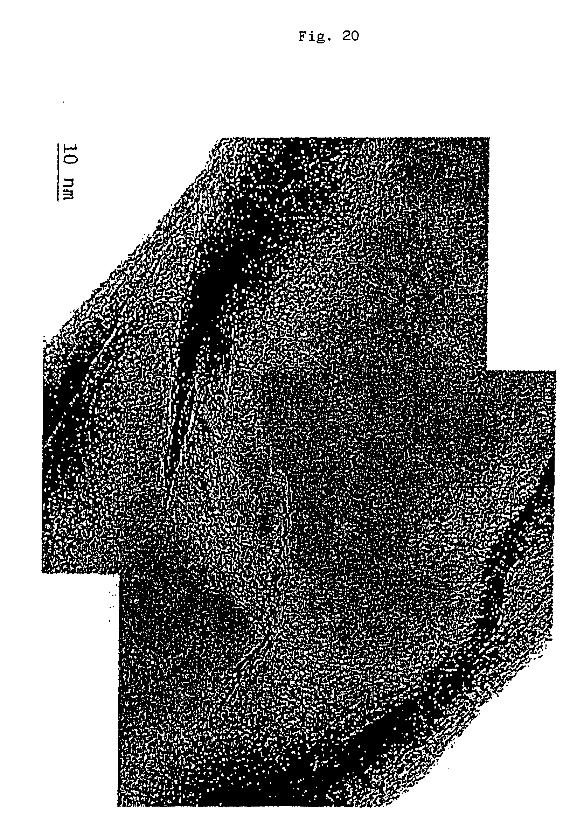

In addition, Fig. 18 is a transmission electron photomicrograph showing the condition in which the carbon fibers are cut into individual carbon fibers during the ball milling. Figs. 19 and 20 are enlarged views of the photomicrograph shown in Fig. 18. As is apparent from these views, it is recognized that the carbon fibers are cut into individual carbon fibers by not breakage of the fibers but release of the bottomless cup-shaped carbon network layers from the carbon fibers.

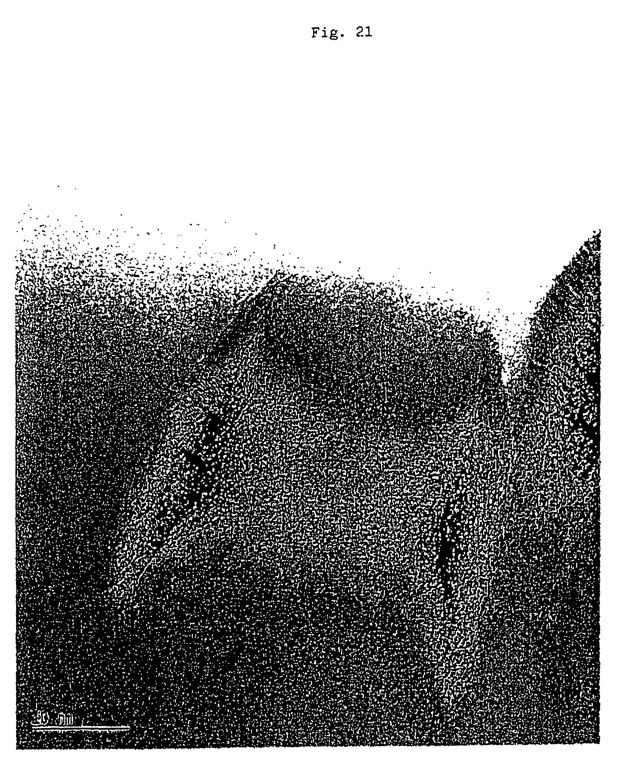

Next, Fig. 21 is a transmission electron photomicrograph showing the carbon fiber whose length is controlled to the above-described condition in which several tens of the bottomless cup-shaped carbon network layers are stacked on each other. The carbon fibers are about 60 nm in both length and diameter thereof, and have a thin-wall tubular shape with a large cavity, i.e., a knotless (bridge-free) hollow shape, and the end face of the respective carbon network layers is exposed onto the outside and inside surfaces of the hollow portion of the respective carbon fibers. Thus, it is recognized that the bottomless cup-shaped carbon network layers are released and separated from the carbon fibers, and the respective carbon network layers are free from breakage of the shape thereof. Meanwhile, the length of the carbon fibers may be optionally controlled by varying the milling conditions. Thus, the milling conditions can be suitably controlled so as to adjust the diameter and length of the obtained carbon fibers to the above preferred ranges of the present invention.

Meanwhile, when ordinary concentric carbon nanotubes are subjected to grinding treatment, there occur problems such as breakage of the tubes, formation of cracks extending in an axial direction on an outer surface thereof, formation of burrs as well as so-called coreless condition, resulting in difficulty in controlling the length of the carbon fibers.

Examples of the rubbers used in the present invention include natural rubbers; general synthetic rubbers; diene-based special rubbers such as emulsion-polymerized styrene-butadiene rubbers, solution-polymerized styrene-butadiene rubbers, high-cis-1,4-polybutadiene rubbers, low-cis-1,4-polybutadiene rubbers and high-cis-1,4-polyisoprene rubbers for example; olefin-based special rubbers such as nitrile rubbers, hydrogenated nitrile rubbers and chloroprene rubbers for example; other special rubbers such as ethylene-propylene rubbers, butyl rubbers, halogenated butyl rubbers, acrylic rubbers and chlorosulfonated polyethylene for example; hydrin rubbers; fluorine rubbers; polysulfide rubbers and urethane rubbers for example. Among these rubbers, in view of good balance between costs and performance, preferred are natural rubbers and general synthetic rubbers.

The rubber composition of the present invention is preferably vulcanized upon use by the method of adding sulfur, peroxides, metal oxides, etc., to the composition and heating the resultant mixture to crosslinking the composition, the method of irradiating light to the composition to which a photopolymerization initiator is added for crosslinking the composition, and the method of irradiating an electron beam or a radiation to the composition for crosslinking the composition.

The rubber composition of the present invention contains 100 parts by mass of a rubber and 0:1 to 100 parts by mass of the above carbon fibers blended in the rubber. When the content of the carbon fibers lies within the above range, the resultant rubber composition shows a sufficient thermal conductivity as well as a good workability upon mixing or molding. Further, from the same view points, the content of the carbon fibers in the rubber composition is more preferably in the rang e of 0.5 to 50 parts by mass.

The rubber composition of the present invention may suitably contains, in addition to the above carbon fibers, carbon black and/or an inorganic filler and various other fillers in an amount of 1 to 60 parts by mass and preferably 1 to 40 parts by mass. The rubber composition containing an appropriate amount of these fillers can exhibit a higher reinforcing effect as compared to the rubber composition to which the carbon fibers only are added.

The carbon black blended in the rubber composition is not particularly limited, and may be optionally selected from those generally used as reinforcing fillers for conventional rubber compositions. Specific examples of the carbon black include FEF, SRF, HAF, ISAF and SAF. The carbon black preferably has an iodine absorption (IA) of 60 mg/g or higher and a dibutyl phthalate oil absorption (DBP) of 80 mL/100 g or higher. Of these carbon blacks, preferred are HAF, ISAF and SAF having an excellent abrasion resistance.

As the inorganic filler, there may be used those inorganic fillers conventionally used in rubber industries without any particular limitation. Examples of the inorganic filler include alumina (Al₂O₃) such as γ-alumina and α-alumina, alumina monohydrate (Al₂O₃·H₂O) such as boehmite and diaspore, aluminum hydroxide [Al(OH)₃] such as gibbsite and bayerite, aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], magnesium aluminum oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂·SiO₄, etc.), aluminum calcium silicate (Al₂O₃·CaO·2SiO₂, etc.), magnesium calcium silicate (CaMgSiO₄), calcium carbonate (CaCO₃), zirconium oxide (ZrO₂), zirconium hydroxide [ZrO(OH)₂·nH₂O], zirconium carbonate (ZrCO₃), and crystalline aluminosilicates containing hydrogen, alkali metal or alkali earth metal acting for correcting electric charges, such as various zeolites. Of these inorganic fillers, preferred are silica and aluminum hydroxide having a nitrogen adsorption specific surface area (N₂SA) of 1 to 20 m²/g, and more preferred is silica.

The silica usable in the present invention may be optionally selected from those generally used as reinforcing materials for conventional rubbers without any particular limitation. Specific examples of the silica include wet silica (hydrous silica), dry silica (anhydrous silica), calcium silicate and aluminum silicate. Of these materials, preferred is synthetic silica obtained by a precipitation method.

Meanwhile, the rubber composition may be mixed and molded by known methods ordinarily used for mixing and molding rubbers, without any particular limitation.

The rubber composition of the present invention which contains a small amount of the above carbon fibers can be considerably enhanced in thermal conductivity without any significant change in other physical properties and deterioration in moldability. Therefore, the rubber composition of the present invention can be extensively used in various applications such as electric and electronic parts, tires, belts and various other products. Meanwhile, the rubber composition of the present invention may appropriately contain various additives generally used in rubber industrial fields such as, for example, vulcanization accelerators, reinforcing materials, anti-aging agents, softening agents and ordinary additives for rubbers.

### (EXAMPLES)

The present invention will be described in more detail below with reference to the following examples. However, these examples are only illustrative and not intended to limit the invention thereto.

### [Method for Evaluation of Physical Properties]

The thermal conductivity of each of the rubber sheets obtained in Examples 1 to 6 and Comparative Example 1 was evaluated. More specifically, the thermal conductivity was evaluated by the value measured by a rapid thermal conductivity meter "QTM-500" available from Kyoto Denshi Co., Ltd.

### EXAMPLE 1

Benzene as a raw material was charged into a chamber of a reactor under a partial pressure corresponding to a vapor pressure thereof at 20°C at a flow rate of 0.3 L/h in a hydrogen gas flow. Ferrocene as a catalyst was vaporized at 185°C, and charged into the chamber at a concentration of 3 x 10⁻⁷ mol/s. The reaction was conducted at 1,100°C for 20 min to obtain cup stack-type carbon fibers having a diameter of about 100 nm which were composed of stacked bottomless cup-shaped carbon network layers having a herring bone structure (hereinafter referred to as "carbon fibers A").

The carbon fibers A and various additives were blended in natural rubber (NR) at ratios shown in Table 1, and the resultant mixture was kneaded under the following kneading conditions, and then formed into a sheet under the following sheet-forming conditions, thereby obtaining a sheet made of the vulcanized rubber composition. Meanwhile, all of the amounts of the materials blended as shown in Table 1 represent "part(s) by mass". The measured thermal conductivity values are shown in Table 1.

### (1) Kneading Conditions

The natural rubber (NR) was simply kneaded at a temperature of 70°C and a rotating speed of 50 rpm for 3 min using a Laboplastomill available from Toyo Seiki Co., Ltd. Then, the respective additives as shown in Table 1 except for the vulcanization accelerator and sulfur were charged into the mill, and the contents in the mill were further mixed together at a temperature of 70°C and a rotating speed of 50 rpm (nonproductive mixing). The resultant mixture was taken out of the mill, cooled and weighed. Thereafter, the remaining vulcanization accelerator and sulfur were added to the mixture, and the obtained mixture was mixed together again at a temperature of 50°C and a rotating speed of 50 rpm using a Brabender (productive mixing).

### (2) Sheet-Forming Conditions

The thus kneaded mixture was vulcanized at 150°C for 15 min using a high-temperature press to prepare a 1 mm-thick vulcanized rubber sheet.

### EXAMPLE 2

The same procedure as in EXAMPLE 1 was repeated except that the carbon fibers A and various additives were blended at ratios shown in Table 1, thereby obtaining a sheet made of the vulcanized rubber composition. The evaluation results are shown in Table 1.

### EXAMPLE 3

The same procedure as in EXAMPLE 1 was repeated except that the cup stack-type carbon fibers composed of stacked bottomless cup-shaped carbon network layers which were previously subjected to disentanglement treatment (hereinafter referred to as "carbon fibers B") were used, thereby obtaining a sheet made of the vulcanized rubber composition. The evaluation results are shown in Table 1.

### EXAMPLE 4

The same procedure as in EXAMPLE 1 was repeated except that the carbon fibers B and various additives were blended at ratios shown in Table 1, thereby obtaining a sheet made of the vulcanized rubber composition. The evaluation results are shown in Table 1.

### EXAMPLES 5 AND 6

The carbon fibers A were cut into individual carbon fibers by the above cutting step, thereby obtaining cup-stack-type carbon fibers having a diameter of 50 to 200 nm and a length of 0.05 to 10 µm which were composed of stacked bottomless cup-shaped carbon network layers (hereinafter referred to as "carbon fibers C"). The same procedure as in EXAMPLE 1 was repeated except that the carbon fibers C and various additives were blended at ratios shown in Table 1, thereby obtaining a sheet made of the vulcanized rubber composition. The evaluation results are shown in Table 1.

### COMPARATIVE EXAMPLE 1

The same procedure as in EXAMPLE 1 was repeated except that no carbon fibers were added, and various additives were blended at ratios shown in Table 1, thereby obtaining a sheet made of the vulcanized rubber composition. The evaluation results are shown in Table 1.

**TABLE 1**

| | Examples | | | | | | Com. Ex. |
|---|---|---|---|---|---|---|---|
| | 1 | 2 | 3 | 4 | 5 | 6 | 1 |
| NR | 100 | 100 | 100 | 100 | 100 | 100 | 100 |
| HAF-grade carbon black | 25 | - | 25 | - | 25 | - | 50 |
| Cup stack-type carbon nanofiber A^{*1} | 25 | 50 | - | - | - | - | - |
| Cup stack-type carbon nanofiber A^{*2} | - | - | 25 | 50 | - | - | - |
| Cup stack-type carbon nanofiber A^{*3} | - | - | - | - | 25 | 50 | - |
| Anti-aging agent | 2 | 2 | 2 | 2 | 2 | 2 | 2 |
| Stearic acid | 2 | 2 | 2 | 2 | 2 | 2 | 2 |
| Zinc oxide | 3 | 3 | 3 | 3 | 3 | 3 | 3 |
| Vulcanization accelerator | 1 | 1 | 1 | 1 | 1 | 1 | 1 |
| Sulfur | 1.5 | 1.5 | 1.5 | 1.5 | 1.5 | 1.5 | 1.5 |
| Thermal conductivity (W/mK) | 0.38 | 0.46 | 0.39 | 0.49 | 0.38 | 0.46 | 0.33 |

| | | | | | | | |
|---|---|---|---|---|---|---|---|
| Note: 1*: Carbon fiber A; Diameter: 50 to 200 nm; Length: 5 to 200 µm | | | | | | | |
| 2*: Carbon fiber B; Diameter: 50 to 200 nm; Length: 5 to 200 µm; Previously subjected to disentanglement | | | | | | | |
| 3*: Carbon fiber C; Diameter: 50 to 200 nm; Length: 0.05 to 10 µm | | | | | | | |

In the carbon fibers produced by a vapor-phase epitaxial growth method according to the present invention, the end face of a large diameter portion of the stacked cup-shaped carbon network layers is exposed onto an outer periphery of the carbon fibers. For this reason, since the exposed end face has a high activity, the carbon fibers are excellent in adhesion to a rubber material in a rubber composition and, therefore, usable as a suitable raw material for production of the rubber composition. Further, since the end faces of the respective inclined bottomless cup-shaped carbon network layers having a herring bone structure are exposed in a layered form, the activity of the exposed end faces (ends of 6-membered ring) of the carbon network layers can be extremely enhanced. Therefore, the carbon fibers are excellent in adhesion to rubbers, so that it is possible to provide a material for the rubber composition having an excellent thermal conductivity. In addition, the end faces of the respective carbon network layers which are exposed on the surface of the carbon fibers in a layered form by removing the deposit layer therefrom, are not aligned with each other and, therefore, have irregularities on a scale of atomic level. As a result, the carbon fibers can exhibit an anchoring effect to rubbers or rubber products and, therefore, are more excellent in adhesion to rubbers, thereby providing a rubber composition having an extremely excellent thermal conductivity.

According to the rubber composition of the present invention, even when the carbon fibers are added in a small amount, the resultant rubber composition can be considerably improved in thermal conductivity without any significant change in various other physical properties as well as deterioration in moldability. Accordingly, the vulcanized rubber composition of the present invention can be extensively applied to electric and electronic parts, tires, belts and various other products. In particular, when the rubber composition is applied to tires, it is possible to prevent heat generation therefrom owing to its good heat dissipation effect.

## Claims

1. A rubber composition comprising 100 parts by mass of a rubber and 0.1 to 100 parts by mass of carbon fibers as a filler which are produced by a vapor phase epitaxial growth method and respectively include one or more bottomless cup-shaped carbon network layers, wherein the respective carbon network layer in the form of stacked cups have a large diameter portion whose end face is exposed onto a periphery of the carbon fiber.

2. The rubber composition according to claim 1, wherein said filler includes the carbon fibers produced by a vapor phase epitaxial growth method which respectively include a plurality of the bottomless cup-shaped carbon network layers stacked on each other.

3. The rubber composition according to claim 2, wherein said carbon fiber has a knotless (bridge-free) hollow shape.

4. The rubber composition according to claim 3, wherein the hollow carbon fibers include a hollow portion having outside and inside surfaces onto which end faces of the carbon network layer are exposed.

5. The rubber composition according to claim 4, wherein 2% or more of the end face of the carbon network layer which is located on the outside surface of the hollow portion of the carbon fiber, is exposed thereto.

6. The rubber composition according to claim 4 or 5, wherein the exposed end face of the carbon network layer has irregularities on a scale of atomic level.

7. The rubber composition according to any of claims 1 to 6, wherein the carbon network layer remains ungraphitized even when it is heat-treated at a high temperature of 2,500°C or higher .

8. The rubber composition according to any of claims 1 to 7, wherein the carbon fibers have diameters of 1 to 1,000 nm and lengths of 0.1 to 1,000 µm.

9. The rubber composition according to any of claims 1 to 7, wherein the carbon fibers have diameters of 5 to 500 nm and lengths of 0.5 to 750 µm.

10. The rubber composition according to any of claims 1 to 7, wherein the carbon fibers have diameters of 10 to 250 nm and lengths of 1 to 500 µm.

11. The rubber composition according to any of claims 1 to 10, further comprising a filler other than the carbon fibers in an amount of 1 to 60 parts by mass.

12. The rubber composition according to claim 11, wherein the filler other than the carbon fibers is carbon black and/or an inorganic filler.

13. A tire using the rubber composition as claimed in any of claims 1 to 12.
